# EUROPÄISCHE PATENTSCHRIFT

(11) **EP 2 799 347 B1**
(45) Veröffentlichungstag und Bekanntmachung des Hinweises auf die Patenterteilung: **20.01.2016**
(21) Anmeldenummer: 14001473.9
(22) Anmeldetag: 24.04.2014
(51) Int. Cl.: B65B 35/26, B65B 57/14, B65G 47/86

(54) **Produkt-Halteeinrichtungen mit Steuerungseinrichtungund Verpackungsmaschine mit solchen**
Product holding devices comprising a control device and packaging machine with the same
Dispositifs de retenue de produit comprenant un dispositif de commande et machine d'emballage dotée de tels dispositifs

(30) Priorität: 30.04.2013 DE 102013007385
(43) Veröffentlichungstag der Anmeldung: 05.11.2014
(73) Patentinhaber: THEEGARTEN-PACTEC GMBH & CO. KG, 01237 Dresden (DE)
(72) Erfinder: Seibt, Wilfried, 01219 Dresden (DE); Wehner, Gert, 01328 Dresden (DE); Förster, Bodo, 01768 Glashütte (DE)
(74) Vertreter: Grünecker Patent- und Rechtsanwälte PartG mbB

(56) Entgegenhaltungen:
- EP-A1- 1 595 827
- US-A1- 2006 112 662

## Beschreibung

Die Erfindung betrifft eine Produkt-Halteeinrichtung mit einer Steuereinrichtung, insbesondere für eine Verpackungsmaschine zur Verpackung kleinstückiger Produkte, wie kleinstückiger Süßwaren, mit einem Rotationskopf mit einer Mehrzahl von mit diesem umlaufenden Klemmeinheiten, wobei jede Klemmeinheit ein Klemmbackenpaar sowie zumindest eine Steuerrolle in Kontakt mit einer ersten Steuerkurve für Öffnungs- und Schließbewegung des Klemmbackenpaares aufweist, sowie mit einer weiteren Einrichtung zur Initiierung einer Öffnungsbewegung des Klemmbackenpaares (EP 1 596 827 A1).

In der Verpackungsindustrie werden Hochleistungs-Verpackungsmaschinen zur Verpackung kleinstückiger Süßwaren wie Hart- oder Weichkaramellen, Pralinen oder anderer kleinstückiger Süßwaren verwendet, die Verpackungsleistungen von bis zu ca. 2 000 Produkten pro Minute erreichen.

Insbesondere sind solche Verpackungsmaschinen als kontinuierliche Verpackungsmaschinen bekannt, bei denen Produkte in einem kontinuierlichen Durchlauf durch die Maschine in der Regel zwischen mehreren rotierenden Köpfen übergeben, durch die Verpackungsmaschine hindurch bewegt und die Produkte verpackt werden.

Es besteht bei derartigen Maschinen das Bedürfnis fehlerhafte Produkte (z. B. unverpackt gebliebene Produkte) oder auch fehlerhafte Verpackungen frühzeitig zu erkennen um auf diese Weise weitere Verpackungsschritte an einem fehlerhaften Produkt einzusparen bzw. nur qualitativ einwandfrei verpackte Produkte z. B. an einen nachfolgenden Stapelpacker für Sammelverpackungen weiterzugeben.

Angesichts der hohen Verpackungsgeschwindigkeiten, den entsprechend hohen Bewegungsgeschwindigkeiten der einzelnen Verpackungsorgane wie auch der Haltemittel (Haltebackenpaare, die für die Produktführung durch die Maschine vorhanden sind) ist es schwierig, z. B. innerhalb eines Arbeitstaktes ein fehlerhaftes Produkt zu erkennen und aus der Verpackungsmaschine zu entfernen ohne die Produktführung eines vorauslaufenden Produktes oder des nachfolgenden Produktes zu beeinträchtigen.

So steht z. B. für eine solche gewillkürte Produktausschleusung aus dem Verpackungsprozess bei einer Arbeitsgeschwindigkeit von z. B. 1 600 Arbeitstakten pro Minute nur ein Zeitraum von weniger als 1/10 s zur Verfügung.

Der Erfindung liegt daher die Aufgabe zu Grunde, eine Steuereinrichtung der eingangs genannten Art zu schaffen, die es gestattet, auch in schnelllaufenden Arbeitsvorgängen, z. B. in Verpackungsmaschinen für kleinstückige Produkte wie kleinstückige Süßwaren, eine äußerst präzise Ausschleusung von Produkten aus einem kontinuierlichen Arbeitsprozess, wie einem Verpackungsprozess, in unkomplizierter und dabei sehr zuverlässiger Weise zu ermöglichen.

Diese Aufgabe wird erfindungsgemäß durch eine Produkt-Halteeinrichtung mit den Merkmalen des Patentanspruchs 1 gelöst.

Auf diese Weise ist es möglich, einzelne Produkte aus einem schnell bewegten Produktstrom, wie z. B. das Aussortieren einzelner Produkte in einer kontinuierlich arbeitenden Verpackungsmaschine hoher Leistung, zu erreichen. Dabei ist das Aussortieren einzelner Produkte in sehr kurzer Zeit und impulsartig in einem Zeitfenster von weniger als einer Zehntelsekunde, vorzugsweise weniger als 5/100 s, möglich.

Das Schalten einer willkürlichen Öffnungsbewegung für eine Klemmeinheit zur Halterung von Produkten, also einem Klemmbackenpaar, erfolgt mittels einer Steuerkurve einer Kurvenscheibe, die vorzugsweise durch einen Servomotor zur Rotation angetrieben wird und eine entsprechende Öffnungsbewegung für die Klemmbacken zur Produktfreigabe innerhalb eines Arbeitstaktes herbeiführen kann, indem diese speziell für eine gewillkürte Produktausschleusung vorgesehene Steuerkurve in einen Bewegungsweg einer Tastrolle gebracht wird, die in Verbindung mit der Klemmeinheit eine gewillkürte Öffnungsbewegung einer entsprechenden Produkthalterung, wie eines Klemmbackenpaares, herbeiführt.

Vorzugsweise kann ein entsprechender Servoantrieb für die Bewegung dieser, für eine Produktausschleusung vorgesehene Steuerkurve (Kreis- oder Exzenterscheibe bzw. Kurvenscheibe) innerhalb eines Arbeitstaktes erfolgen und kann ein entsprechender Servoantrieb adaptiv auf Prozessvorgänge innerhalb der Arbeitsmaschine, wie einer Verpackungsmaschine, reagieren.

Vorzugsweise folgt ein Ausschleusungsvorgang für ein Produkt aus einem kontinuierlichen Produktstrom unter Ausnutzung der Fliehkraft bzw. Zentripedalkraft eines umlaufenden Rotationskopfes mit dem die entsprechenden Klemmeinheiten in Kontakt mit einer ersten Steuerkurve für eine reguläre Steuerung der Produkthalterung (Öffnungs- und Schließbewegung von Klemmbackenpaaren) umlaufen.

Die vorzugsweise vorgesehene, fliehkraftunterstützte Aussortierung (Ausschleusung) von Produkten kann durch zusätzliche pneumatische und/ oder mechanische, an dem Produkt angreifende, Kräfte unterstützt werden.

Erfindungsgemäß weist die ein Klemmbackenpaar aufweisende Klemmeinheit paarweise eine Steuerrolle und eine Tastrolle auf. Die Steuerrolle ist in entsprechendem Nockenfolgerkontakt mit einer ersten Steuerkurve zur regulären Steuerung für eine Öffnungs- und Schließbewegung eines Klemmbackenpaares. Die Steuerrolle ist vorzugsweise auf einem Wellenzapfen aufgenommen. Die Tastrolle ist ebenfalls auf vorzugsweise demselben Wellenzapfen aufgenommen, dessen kurvengesteuerte Bewegung über einen Kurvenhebel auf eine Lagerungswelle übertragen wird, mit der eine Klemmbacke des Klemmbackenpaares fest verbunden ist. Eine Bewegungsübertragung auf die weitere Klemmbacke des Klemmbackenpaares erfolgt vorzugsweise über einen mit dem Kurvenhebel verbundenen Gleitsteinmechanismus.

In einen Bewegungsweg der üblicherweise "leerlaufenden", d. h. mit der Klemmeinheit umlaufenden Tastrolle kann in Abhängigkeit von einem Auswerfersignal, also durch entsprechend signalgesteuerte Ansteuerung, eine zweite Steuerkurve als Impulsgeber gebracht werden, die zu einer Rotationsbewegung der Lagerungswelle und damit zu einer Öffnungsbewegung des zugehörigen Klemmbackenpaares für eine willkürliche Auswerfbewegung führt.

Durch die Erfindung ist es möglich, auch bei sehr schnell ablaufenden Vorgängen einzelne Produkte aus einem Produktstrom, der z. B. durch eine kontinuierliche Verpackungsmaschine hindurchläuft, innerhalb eines Arbeitstaktes auszusortieren und auf diese Weise eine hohe Produkt- bzw. Verpackungsqualität zu erreichen, wie auch sicherzustellen, dass nur fehlerlose Produkte z. B. in nachfolgende Sammelverpackungen abgegeben werden.

Die Erfindung wird nachstehend anhand eines Ausführungsbeispieles und zugehöriger Zeichnung näher erläutert. In diesen zeigen:
- Figur 1: einen Rotationskopf mit einer Mehrzahl von mit diesen umlaufenden Klemmeinheiten in Kontakt mit einer Kurvenscheibe und einer Auswerfer-Exzenterscheibe in schematischer Vorderansicht,
- Figur 2: eine Ansicht ähnlich derjenigen in Figur 1 für den Fall einer Auswerfer-Betätigung der Auswerfer-Exzenterscheibe zur Ausschleusung eines Produktes,
- Figur 3: eine perspektivische Darstellung des Rotationskopfes nach Figur 1
- Figur 4: einen Ausschnitt des Rotationskopfes nach Figur 1 unter Darstellung einer Klemmeinheit 3 mit einem Haltebackenpaar 4
- Figur 5: eine schematische, perspektivische Längsschnittdarstellung der Steuereinrichtung nach dem vorliegenden Ausführungsbeispiel in Teildarstellung des Rotationskopfes nach Figur 1,
- Figur 6: eine schematische Draufsicht auf drei Klemmeinheiten des Rotationskopfes nach Figur 1 ohne zugehörige Lagerungsmittel innerhalb des Rotationskopfes, und
- Figur 7: eine perspektivische Ausschnittsdarstellung des Rotationskopfes nach Figur 1 für einen Bereich einer Exzenterscheibe zur Produktausschleusung nach dem vorliegenden Ausführungsbeispiel.

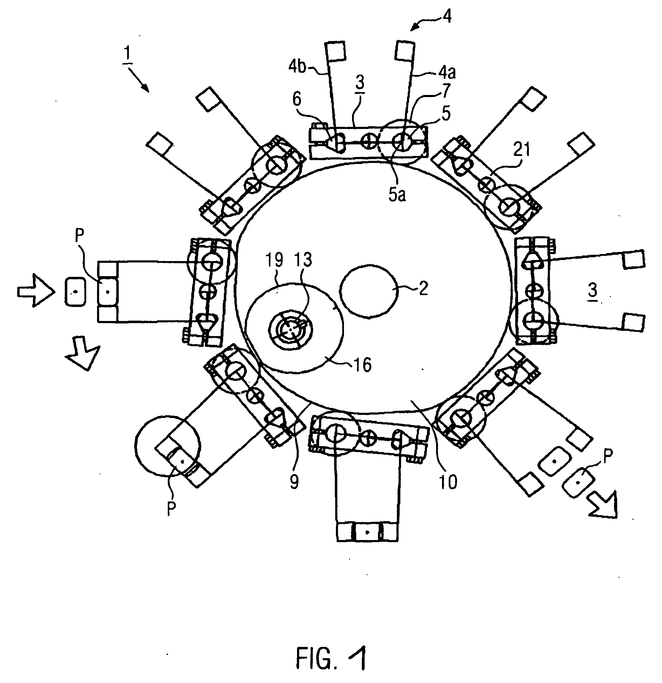

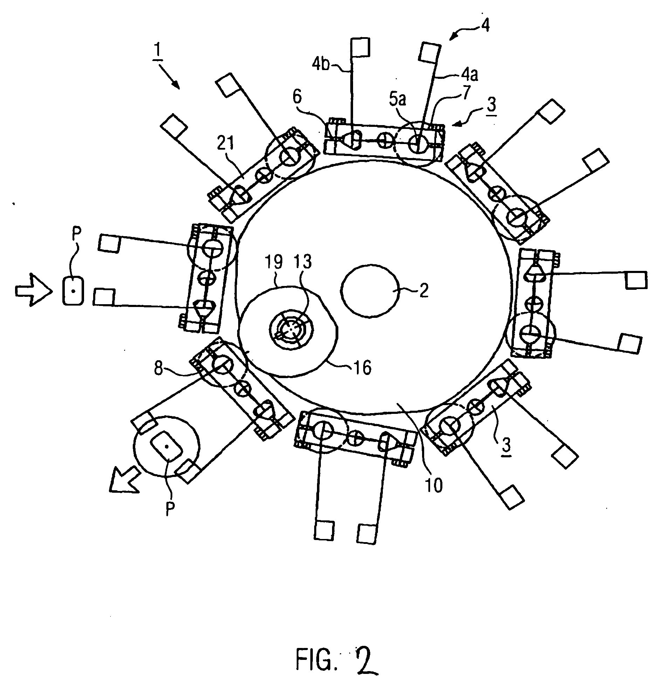

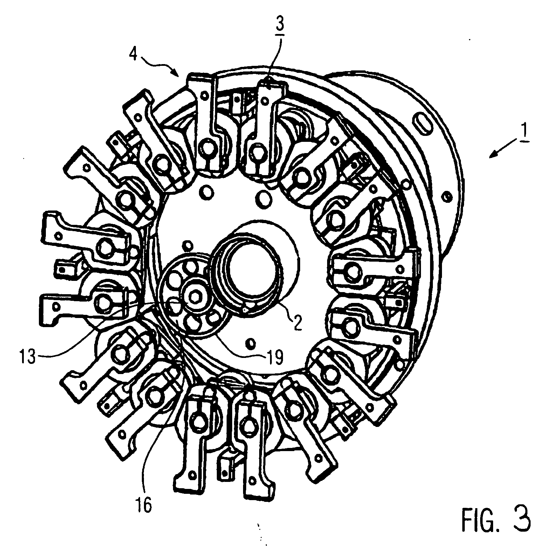

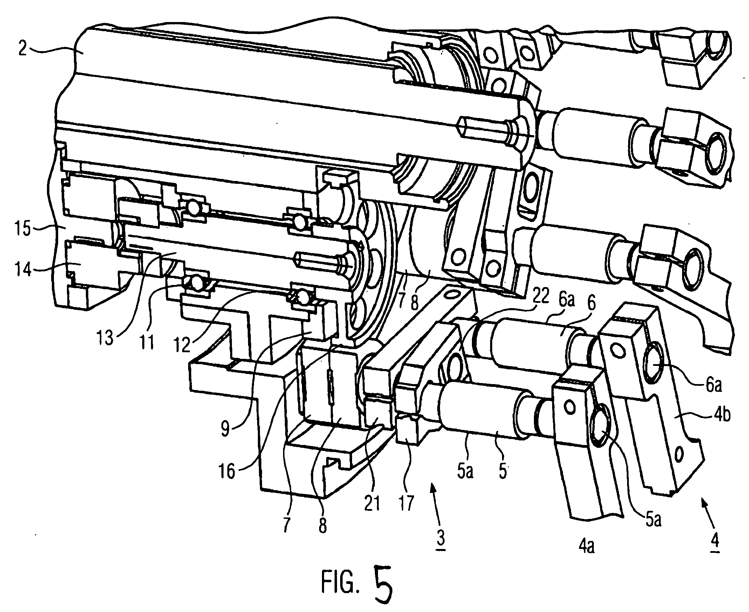

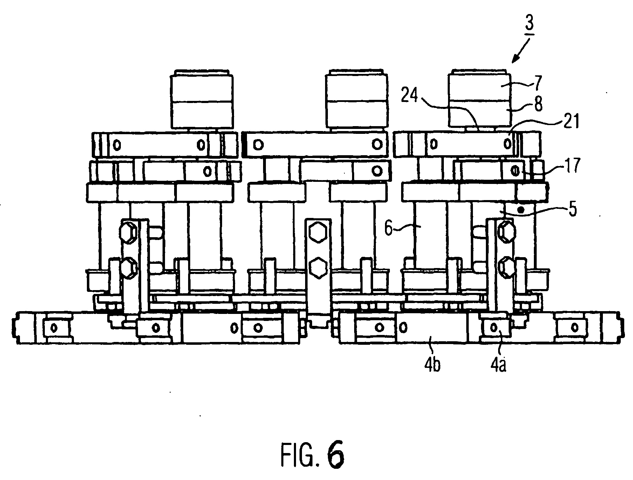

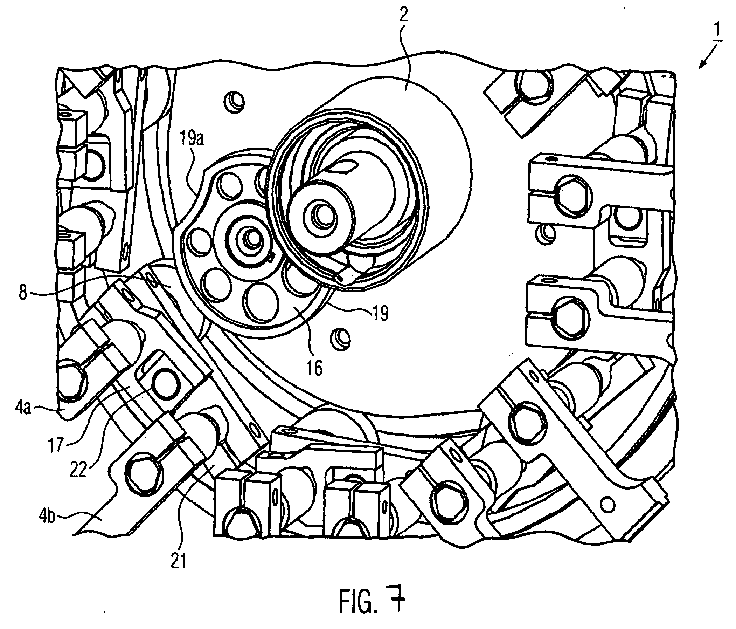

Ehe auf den in Figur 2 schematisch dargestellten Vorgang des Ausschleusens oder Aussortierens eines (fehlerhaften) Produktes aus einem Produktstrom aus kleinstückigen Produkten, der in einer nach dem kontinuierlichen Arbeitsprinzip arbeitenden Hochleistungs-Verpackungsmaschine z. B. mit Leistungen zwischen 1 500 und 2 000 Produkten pro Minute arbeitet, vorgesehen sein soll, genauer eingegangen wird, soll kurz die zugrunde liegende Steuereinrichtung anhand von Figuren 3 bis 7 erläutert werden. Ein Rotationskopf, auch als Zwischenrad 1 bezeichnet, ist zur Rotation um eine stationäre, im Maschinengestell gelagerte Achse 2 gelagert und weist eine Reihe von, in diesem Fall z. B. acht (Figur 1), Klemmeinheiten 3 auf, die mit dem Rotationskopf 1 um die stationäre Achse 2 umlaufen.

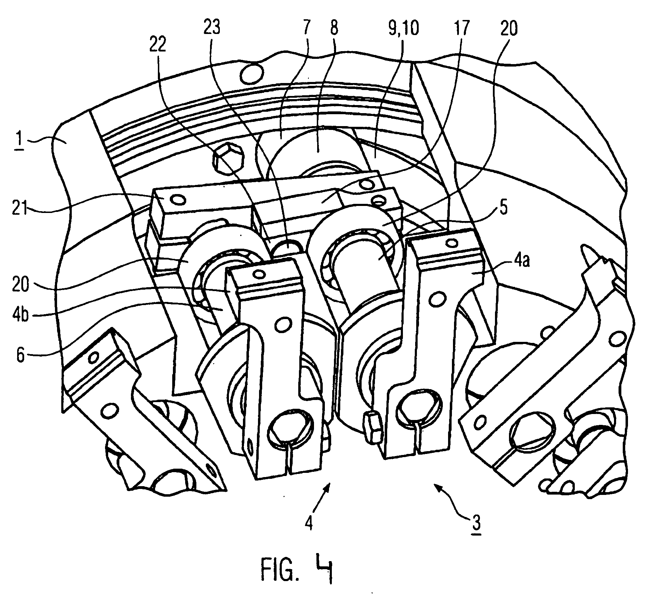

Jede Klemmeinheit 3 weist ein Klemmbackenpaar 4 mit Klemmbacken 4a, 4b auf, zwischen denen ein (in den Figuren 3 bis 7 nicht dargestelltes) Produkt P aufgenommen und geklemmt werden kann, um nach einem entsprechenden Teilumlauf an einer entsprechenden Abgabeposition abgegeben oder von einem anderen Haltebackenpaar eines anderen Rades einer hier nicht näher dargestellten, z. B. nach dem kontinuierlichen Verpackungsprinzip gemäß EP 1 712 472 B1 arbeitenden Verpackungsmaschine, verpackt zu werden. In vorliegendem Fall ist jeder Klemmbacke 4a, 4b jedes Klemmbackenpaares 4 eine eigene Steuerwelle 5 (Klemmbacke 4a) bzw. Lagerungswelle 6 (Klemmbacke 4b) zugeordnet, so dass die Klemmbacken 4a, 4b über eigene Lagerungsachsen 5a, 6a gelagert und zu einer Öffnungs- und Schließbewegung gemeinsam mit einer Verdrehung der Steuerwelle 5 und der Lagerungswelle 6 bewegbar sind. Die Klemmeinheiten 3 sind über Kugellager 20 in Verbindung mit Umfangsabschnitten 5b, 6b der Steuer- bzw. Lagerungswelle 5a, 6a in einem vorderen Innenbereich des Rotationskopfes 1 drehbar gelagert (s. Figur 4). Zu anderen Ausführungen kann die Öffnungs- und Schließbewegung der Klemmbacken (4a, 4b) eines Klemmbackenpaares 4 auch über eine gemeinsame Servowelle oder auch um Achsen erfolgen, die für jede Klemmbacke einzeln im Wesentlichen rechtwinkelig zu einer Rotationsachse eines zugehörigen Rotationskopfes an dem die Klemmbackenpaare gelagert sind oder auch in gleicher, rechtwinkeliger Orientierung beider Klemmbacken eines Klemmbackenpaares gemeinsam ist.

D. h. die Klemmbacken 4a, 4b eines Klemmbackenpaares 4 können in anderen Ausführungsformen auch auf einer gemeinsamen Achse koaxial angeordnet sein bzw. es ist auch ausreichend wenn nur eine Klemmbacke jedes Klemmbackenpaares beweglich ist und für eine Öffnungs- oder Schließbewegung des Klemmbackenpaares 4 für die Aufnahme oder Abgabe eines Produktes P bewegungsgesteuert ist. Die Klemmbacken 4 können auch über eine Federeinrichtung gegeneinander zu einer Schließbewegung vorgespannt sein, so dass die Öffnungsbewegung eines Klemmbackenpaares 4 entgegen einer Federkraft erfolgt.

In anderen Ausführungsformen können die Klemmbacken 4a, 4b zu einer Öffnungs- und Schließbewegung auch um eine gemeinsame oder zwei beabstandete Schwenkachsen schwenkbar sein, die sich rechtwinklig zur Achse 2 des Zwischenkopfes 1 erstrecken (d. h. in Figur 1 parallel zur Zeichenebene verlaufend), wobei dann ein Produkt P, nicht wie in Figur 1 und 2 gezeigt, über seine Länge, d. h. tangential, sondern über seine Breite, d. h. radial geklemmt wird und die Klemmbackenpaare gegenüber der Darstellung in den Figuren 1 und 2 um 90° gedreht, ggf. auch auf einer gemeinsamen Achse, angeordnet sind.

Im vorliegenden Fall wird über die Lagerungswelle 6 (Klemmbacke 4b) jedes Klemmbackenpaares 4, für eine Öffnungs- oder Schließbewegung des Klemmbackenpaares 4 gesorgt. Auf dieser Lagerungswelle 6 ist die Klemmbacke 4b klemmbefestigt. Über einen nachfolgend noch erläuterten Übertragungsmechanismus (Kurvenhebel 21, Gleitstein 22) wird die Öffnungs-Schließbewegung für die Klemmbacken 4a, 4b von der Lagerungswelle 6 (Klemmbacke 4b) auf die Steuerwelle 5 (Klemmbacke 4a) übertragen, wobei die Klemmbacke 4a fest mit der Steuerwelle 5 verbunden ist.

Die Klemmbacke 4b ist fest auf eine entsprechende Lagerungsachse 6 aufgeklemmt.

Diese Bewegungssteuerung wird nachfolgend erläutert (siehe insbesondere Figuren 4 bis 7).

Die Klemmeinheiten 3 sind in dem Rotationskopf 1 über Kugellager 20 gelagert, so dass sich die zugehörigen Steuer- bzw. Lagerwellen 5, 6 jeder Klemmeinheit 3 zur Erzeugung der Öffnungs- und Schließbewegung der Klemmbackenpaare 4 um einen gewissen Winkelbetrag drehen können. Mit Lagerungswelle 6 bzw. Steuerwelle 5 ist die jeweilige Klemmbacke 4a, 4b fest verbunden. Diese Rotationsbewegung der Lagerungswelle 6 bzw. der Steuerwelle 5 wird durch eine feststehende erste Steuerkurve 9 einer Kurvenscheibe 10 erzeugt, auf deren Umfang in einem Nockfolgerkontakt eine Steuerrolle 7 jeder Klemmeinheit 3 aufgrund der Rotationsbewegung des Rotationskopfes 1 abrollt, so dass eine entsprechende radiale Auslenkung der Steuerrolle 7 in die Öffnungs- und Schließbewegung der Klemmbacken 4a. 4b eines Klemmbackenpaares 4 umgesetzt wird. Hierzu ist ein Wellenzapfen 24 vorgesehen, der eine Doppelanordnung aus Steuerrolle 7 und einer weiteren Tastrolle 8 trägt, die auf dem Wellenzapfen 24 gelagert sind (siehe Figur 4). Dieser trägt andererseits lose (mit Spiel) einen Kurvenhebel 21, der die Radialauslenkung des Wellenzapfens (vermöge der Steuerrolle 7) auf die Lagerungswelle 6 bzw. Lagerungsachse 6a der Klemmbacke 4b des Klemmbackenpaares 4 überträgt und der fest auf diese Lagerungswelle 6 aufgeklemmt ist.

In Abhängigkeit von der Kurvenbewegung des Kurvenhebels, verursacht durch den Nockenfolgerkontakt zwischen Steuerrolle 7 und stationärer Kurvenscheibe 10 mit der ersten Steuerkurve 9 wird der auf dem Wellenzapfen 24 gelagerte Kurvenhebel 21, der auf der Lagerungsachse 6 der Klemmbacke 4b geklemmt ist, bewegt, so dass diese Lagerungswelle 6 eine entsprechende Rotationsbewegung zur einer Öffnungs- oder Schließbewegung der Klemmbacke 4b ausführt. Die Übertragung dieser Bewegung auf die andere Klemmbacke 4a der Klemmeinheit 3 wird durch einen Übertragungshebel 17 mittels eines Gleitsteines 22 realisiert, der über einen Verbindungsstift bzw. Zapfen 23 mit dem Kurvenhebel 21 verbunden ist, so dass per Gleitstein 22 die Steuerbewegung des Kurvenhebels 21 auf den Übertragungshebel 17 übertragen wird, der auf das Ende der Steuerwelle 5 mit der Steuerachse 5a aufgeklemmt ist (Wellenzapfen 24 und Steuerwelle 5 sind also unterbrochen). Auf diese Weise führt die Klemmbacke 4a eine zur Klemmbacke 4b korrespondierende Öffnungs- oder Schließbewegung unter Rotationsbewegung der Steuerwelle 5 durch den Übertragungshebel 12 aus. Dieser Bewegungs-Übertragungsmechanismus mit Steuerrolle 7, Wellenzapfen 23, Kurvenhebel 21 in Gleitsteinverbindung mit einem Übertragungshebel 17 zur Steuerung einer Öffnungs- und Schließbewegung der Klemmbacken 4a, 4b ist für sämtliche, mit dem Rotationskopf 1 umlaufenden Klemmeinheiten 3 jeweils vorgesehen (siehe Figur 1).

Auf diese Weise wird ein Produkt, z. B. in einer 9-Uhr-Position aufgenommen (vgl. Figur 1) und nach Erreichen einer 5-Uhr-Position abgegeben.

Die Steuerrolle 7 in Verbindung mit der Kurvenscheibe 10 sorgt also für die übliche Öffnungund Schließbewegung des Haltebackenpaares 4 durch abrollenden Kontakt der entsprechenden Kurvenrolle 7 an der stationären Kurvenscheibe 10. Die anderen Klemmeinheiten 3 haben einen korrespondierenden Aufbau und laufen bei einem Drehantrieb des Rotationskopfes 1 mit diesem um.

Für eine gewillkürte Auswerferbewegung eines fehlerhaften, z. B. unverpackten oder falsch verpackten Produkts, ist in der Kurvenscheibe 10 und dem übrigen Lagerungsaufbau des Rotationskopfes 1 (vergleiche Lager 11, 12) eine Exzenterwelle 13 gelagert, die über eine Kupplung 14 durch einen eigenen Servomotor 15 angetrieben wird (siehe Figuren 2, 5, 7). Dieser Servomotor 15 kann Steuersignale zu einer Umfangsverdrehung, vorzugsweise 360°-Drehung einer vorzugsweise achsparallel zur Achse der Kurvenscheibe angeordnete Exzenterscheibe oder Kurvenscheibe 16 erhalten, mit der an einer bestimmten Umfangsposition der Kurvenscheibe 10, z. B. einer 7-Uhr-Position, wie dargestellt, die Exzenter- oder Kurvenscheibe 16 in einen Bewegungsweg der ansonsten "leerlaufenden" Tastrolle 8 gelagert, die gemeinsam mit der Steuerrolle 7 auf dem Wellenzapfen 24 gelagert ist. Dadurch wird unabhängig von einer Steuerung durch die Steuerrolle 7 die Lagerungswelle 6 durch den die Lagerungswelle 6 um einen bestimmten Rotationswinkel verdrehenden Eingriff der Tastrolle 8 aufgrund des Kontaktes mit der Exzenter- oder Kurvenscheibe 16 gedreht und damit über den gleichen Mechanismus, wie oben für die "normale" Öffnungs- und Schließbewegung des Klemmbackenpaares 4 beschrieben (Kurvenhebel 21, Lagerungswelle 6, Gleitstein 22, Steuerwelle 5), eine außerplanmäßige Öffnungsbewegung des Klemmbackenpaares 4 zum Ausschleusen eine geklemmten Produktes bewirkt. Vorzugsweise sind Steuer- und Kurvenrolle als Kugellager ausgebildet, deren Innenring auf den Wellenzapfen 24 sitzt. In Figur 2 ist in der Ausschleusungsposition (7-Uhr-Position) die koaxial zur Steuerrolle 7 angeordnete Tastrolle 8 dargestellt, die in den übrigen Teilen der Figur 2, ebenso wie in Figur 1 weggelassen ist. Tastrolle 8 und Steuerrolle 7 sind durchmessergleich (siehe Figur 4).

Der Bewegungsübertragungsmechanismus (Kurvenhebel 21, geklemmt auf Klemmbacken-Lagerungswelle 6, Stiftverbindung zwischen Kurvenhebel und Gleitstein 22, Gleitstein 22 in Gleitnut eines beweglich angreifenden Übertragungshebel 17, festgeklemmt auf der weiteren Klemmbacken-Steuerwelle 5), kann auch in anderer Weise, z. B. in Verbindung mit kämmenden Zahnsegmenten zur gegenseitigen Bewegungssteuerung der Klemmbacken eines Klemmbackenpaares ausgebildet sein.

Hinsichtlich der Massenträgheiten, Arbeitsgeschwindigkeiten und der Funktionssicherheit der Anordnung unter hohen Arbeitsgeschwindigkeiten wird allerdings die vorliegend erläuterte Anordnung bevorzugt.

In Verbindung mit einer hier nicht dargestellten Sensoranordnung kann ein solches Ausschleusungssignal an den Servomotor 15 gegeben und die Aussortierung oder Ausschleusung eines Produktes P innerhalb eines Arbeitstaktes in einem Zeitfenster eines Bruchteils einer Sekunde, so dass der gesamte Durchlaufprozess des Produktstromes durch die Arbeitsmaschine, insbesondere Verpackungsmaschine nicht beeinträchtigt wird.

In Abhängigkeit von den Platzverhältnissen können innerhalb eines Rotationskopfes 1 auch mehrere derartiger Exzenterwellen und Aussortiermechanismen angeordnet sein, so dass eine Aussortierung von Produkten an verschiedenen Stellen eines Umfangsweges der Produkte im Bereich des Rotationskopfes 1 vorgenommen werden kann.

Das Prinzip der Vorrichtung nach dem vorliegenden Ausführungsbeispiel zum Aussortieren bzw. Ausschleusen eines unvollkommenen (fehlerhaften, z. B. unverpackten oder falsch verpackten oder schlecht verpackten Produktes) aus einem Produktstrom ist schematisch nochmals anhand der Figuren 1 und 2 nachfolgend erläutert. Der Rotationskopf 1 weist acht Arbeitsstationen auf, die mit ihm umlaufen und hier als Klemmeinheiten 3 bezeichnet sind, mit Klemmbackenpaaren 4.

Innerhalb der stationären, eine feste Achse 10a aufweisende Kurvenscheibe 10 bzw. dem übrigen stationären Achsaufbau der Einrichtung ist die Exzenterwelle 13 mit der Kreisscheibe 16 derart angeordnet, dass die Kreisscheibe 16 exzentrisch gelagert ist, so dass bei einer Rotation der Exzenterwelle 13, die mit dieser fest verbundene Kreisscheibe 16 eine entsprechende Verlagerung ihrer Umfangskurve als zweite Steuerkurve 19 ausführt. Es ist selbstverständlich auch möglich, die Kreisscheibe 16 als Exzenterscheibe mit einem Nockenprofil auszuführen und zentrisch zu lagern bzw. fest mit der sie tragenden Exzenterwelle zu verbinden.

Figur 1 zeigt die übliche Arbeitsweise der Einrichtung für eine fehlerfreie Produktführung eines Produktstromes, z. B. durch eine Verpackungsmaschine in der sich die vorliegende Einrichtung als ein Zwischenrad 1 bzw. Rotationskopf 1 befindet, wobei die Produkte P von der sich in einer 9-Uhr-Position befindenden Klemmeinheit 2 zwischen den Haltebacken 4a, 4b des Haltebackenpaares aufgenommen und das Produkt P entsprechend geklemmt wird, wobei in Verbindung mit der Umlaufbewegung des Rotationskopfes 1 bzw. Zwischenrades 1 um die stationäre Achse 2 (die auch die Zentralachse für die stationäre Kurvenscheibe 10 bildet und eine Zentralachse des Zwischenrades bzw. Rotationskopfes 1 ist) das geklemmte Produkt P aus der 9-Uhr-Position gegen den Uhrzeigersinn in die 5-Uhr-Position befördert und dort z. B. an einen nachgeschalteten Stangenpacker oder auch an eine Abgabeeinrichtung abgegeben oder auch von einem weiteren Verpackungsrad einer kontinuierlichen Verpackungsmaschine zur Fortsetzung der Verpackung oder deren Siegelung und dergleichen übernommen, wird, und zwar unter der Kurvensteuerung durch die Steuerrolle 7 im Eingriff mit der ersten Steuerkurve 9 der stationären Kurvenscheibe 10.

Figur 1 zeigt daher die übliche Arbeitsweise in schematischer Darstellung. Auf dem Bewegungsweg der Klemmeinheit 2 wird auch eine 7-Uhr-Position passiert, in deren Winkelbereich sich die Auswerfer- oder Aussortiereinheit befindet in dem in diesem Bereich die Exzenterwelle 13 mit der Exzenter- oder Kurvenscheibe 16 gelagert ist.

Wird nun durch eine hier nicht dargestellte optische oder z. B. Infrarot-Sensoranordnung festgestellt, dass durch das Zwischenrad bzw. den Rotationskopf 1 ein unverpacktes Produkt P oder ein fehlerhaft verpacktes Produkt P ergriffen wurde, das nicht weiter verarbeitet werden soll (vorzugsweise erfolgt diese sensorische Erfassung schon stromauf der Übergabe des Produktes and das Zwischenrad 1 bzw. den Rotationskopf 1 in der 9-Uhr-Position oder unmittelbar in Verbindung mit dieser oder im Anschluss an diese), so verdreht der Servomotor 15 die Exzenterwelle 13 und drängt damit die exzentrisch gelagerte Kurvenscheibe 16 in den Bewegungsweg, der ansonsten leerlaufenden Tastrolle 8, die ebenfalls in unmittelbarer Nachbarschaft zu der Kurvenrolle 7 als Steuerrollenpaar auf dem Wellenzapfen 24 angeordnet ist (Figuren 2, 4). Auf diese Weise wird eine gewillkürte Öffnungsbewegung der Haltebacke 4a bzw. des Haltebackenpaares 4 in der 7-Uhr-Position initiiert, wie dies in Figur 2 schematisch dargestellt ist und das Produkt auf diese Weise aus dem Produktstrom ausgeschleust und zwar zwischen zwei Arbeitstakten, ohne dass es hierdurch zu Verzögerungen oder Behinderungen der übrigen Produktverarbeitung kommt. Hierzu weist die Kurven- bzw. Exzenterscheibe eine zweite Steuerkurve 19 auf, z. B. einen Kreis, der einseitig abgeflacht ist, wie dies z. B. in der exzentrischen Lagerung der Kurvenscheibe 16 in Figur 2 gezeigt ist. Das zentripedalkraftbedingte und schwerkraftunterstützte Verlassen des Produktes wird vorzugsweise durch eine am Produkt zusätzlich angreifende Zwangskraft, z. B. Pneumatikdruck über eine oder mehrere Ausblasdüsen oder auch mechanisch unterstützt, da ggf. die nur sehr knapp zur Verfügung stehende Zeit für das Ausschleusen des Produktes nicht ausreichend ist.

Würde die Stellung nach Figur 2 beibehalten, werden selbstständig abfolgend mehrere Produkte an dieser Stelle aus dem Produktstrom ausgeschleust. Figur 2 zeigt allerdings nur eine Momentaufnahme des Aussortier- bzw. Ausschleusvorganges. Üblicherweise wird die Exzenterwelle 13 um eine 360°-Drehung gedreht, so dass das Ausschleusen z. B. innerhalb eines Zeitraumes von wenigen hundertstel Sekunden geschieht (in Abhängigkeit von der Arbeitsgeschwindigkeit bzw. der Arbeitstaktanzahl mit der die Maschine betrieben wird) und im Übrigen die Kreis- bzw. Exzenterscheibe 16 sich in ihrer in Figur 1 dargestellten "Ruheposition" befindet.

Die Einrichtung ist insbesondere in nach dem kontinuierlichen Prinzip arbeitenden Verarbeitungsmaschinen, insbesondere einer Verpackungsmaschine als Zwischenrad einsetzbar um in einfacher Weise auch im Hochleistungsbereich das Ausschleusen eines einzelnen Produktes aus einem kontinuierlichen Produktstrom zu ermöglichen. Die Einrichtung kann auch in Kombination mit z. B. einem anschließenden Sammelpacker, der die einzelnen Produkte zu Sammelverpackungen anstapelt, vorgesehen sein, wobei eine solche Aussortier- oder Auswerfeeinheit, wie sie das vorliegende Ausführungsbeispiel in Gestalt der Kreis- bzw. Exzenterscheibe 16 mit Exzenterwelle 13 und zugehöriger Abtastrolle 8 in Verbindung mit einer Lagerungsanordnung für ein Klemmbackenpaar 4 zeigt, auch in Kombination mit anderen Verpackungsrädern oder rotierenden Köpfen einer solchen Verpackungsmaschine vorgesehen sein kann.

### Bezugszeichenliste

- 1: Rotationskopf / Zwischenrad
- 2: Achse
- 3: Klemmeinheit
- 4: Haltebackenpaar
- 4a, 4b: Haltebacken
- 5: Steuerwelle
- 5a, 6a: Lagerungsachse
- 5b, 6b: Umfangsabschnitte
- 6: Lagerwelle
- 7: Kurvenrolle
- 8: Abtastrolle
- 9: erste Steuerkurve
- 10: Kurvenscheibe
- 11, 12: Lager
- 13: Exzenterwelle
- 14: Kupplung
- 15: Servomotor
- 16: Exzenter- oder Kurvenscheibe
- 17: Lagerungshebel
- 18: Achse
- 19: zweite Steuerkurve
- 20: Kugellager
- P: Produkt

## Patentansprüche

1. Produkt-Halteeinrichtung mit einer Steuereinrichtung, insbesondere für eine Verpackungsmaschine zur Verpackung kleinstückiger Produkte (P), wie kleinstückiger Süßwaren, mit einem Rotationskopf (1) mit einer Mehrzahl von mit diesem umlaufenden Klemmeinheiten (3), wobei jede Klemmeinheit (3) ein Klemmbackenpaar (4) sowie zumindest eine Kurvenrolle (7) in Kontakt mit einer ersten Steuerkurve (9) für eine Öffnungs- und Schließbewegung des Klemmbackenpaares (4) aufweist, und mit einer weiteren Einrichtung (13, 16, 18) zur Initiierung einer Öffnungsbewegung des Klemmbackenpaares (4), **gekennzeichnet durch** eine relativ zu der Klemmeinheit (3) bewegbare, zweite Steuerkurve (19) für die Öffnungsbewegung des Klemmbackenpaares (4) in Abhängigkeit von einem Sensorsignal, wobei die Kurvenrolle (7), die in Kontakt ist mit der ersten Steuerkurve (9) einer ersten Kurvenscheibe (10), die Öffnungs- und Schließbewegung des Klemmbackenpaares (4) steuert, die Klemmeinheit (3) eine Tastrolle (8) aufweist, mit der die zweite Steuerkurve (19) in Abhängigkeit von einem Sensorsignal in Eingriff bringbar ist, und die Kurvenscheibe (10) die erste Steuerkurve (9) bildet und eine zweite Kurven- oder Exzenterscheibe lagert, die in Abhängigkeit von einem Steuersignal in einen Bewegungsweg der Tastrolle (8) bringbar ist, zur gewillkürten Einleitung einer Öffnungsbewegung des Haltebackenpaares (4).

2. Produkt-Halteeinrichtung nach Anspruch 1, **dadurch gekennzeichnet, dass** die Steuerrolle (7) und die Kurvenrolle (8) in paarweiser Anordnung auf einem Wellenzapfen (24) gelagert sind, die Steuerrolle (7) mit einer ersten Steuerkurve (9) einer stationären Kurvenscheibe (10) für eine planmäßige Öffnungs- und Schließbewegung des Klemmbackenpaares (4) in Eingriff bringbar ist, die Kurvenrolle (8) zum außerplanmäßigen Eingriff mit der zweiten Steuerkurve (19) für eine gewillkürte Öffnungsund Schließbewegung des Klemmbackenpaares (4) in Abhängigkeit von einem Ausschleusungssignal bringbar ist und auf dem Wellenzapfen (24) vorzugsweise ein Kurvenhebel (21) gelagert ist, der in Klemmeingriff mit einer Lagerungswelle (6) zumindest einer Klemmbacke (4b) eines Klemmbackenpaares (4) ist, wobei die Lagerungswelle (6) drehbar in dem Rotationskopf (1) gelagert ist.

3. Produkt-Halteeinrichtung nach Anspruch 1 oder 2, **gekennzeichnet durch** einen Gleitstein (22), gekoppelt **durch** einen Verbindungszapfen (23) mit dem Kurvenhebel (21), wobei der Gleitstein (22)in einem Übertragungshebel (17) gleitverschieblich gelagert ist, der fest mit einer Steuerwelle (5) zumindest einer weiteren Klemmbacke (4a) eines Klemmbackenpaares (4) verbunden ist.

4. Verpackungsmaschine, insbesondere zur Verpackung kleinstückiger Produkte mit einer Mehrzahl rotierender Köpfe zum Transport der Produkte und zur einzelnen Verpackung derselben, **gekennzeichnet durch** eine Produkt-Halteeinrichtung nach einem der vorhergehenden Ansprüche 1 bis 3.

5. Verpackungsmaschine nach Anspruch 4, **gekennzeichnet durch** eine an eine Einzelverpackung von Produkten (P) sich anschließende Sammelverpackungseinrichtung, wie einen Stangenpacker.

6. Verpackungsmaschine nach Anspruch 4 oder 5 **gekennzeichnet durch** eine Anstapelvorrichtung zur Gruppierung einer vorbestimmten Anzahl von Produkten und einer dieser nachgeordneten Sammelverpackungseinrichtung.

## Claims

1. Product holding devices comprising a control device, particularly for a packaging machine for packaging small-sized products (P), such as small-sized confectionery, with a rotation head (1) with a plurality of clamping units (3) rotating therewith, each clamping unit (3) comprising a pair of clamping jaws (4) and at least one cam roller (7), in contact with a first control cam (9) for an opening and closing movement of the pair of clamping jaws (4), with a further device (13, 16, 18) for initiating an opening movement of the pair of clamping jaws (4), **characterized by** a second control cam (19) which is movable relative to the clamping unit (3) for the opening movement of the pair of clamping jaws (4) in response to a control signal, wherein the cam roller (7) which is in contact with the first control cam (9) of a first cam disc (10) controls the opening and closing movement of the pair of clamping jaws (4), the clamping unit (3) comprises a sensing roller (8) with which the second control cam (19) can be brought into engagement in response to a sensor signal, and the cam disc (10) forms the first control cam (9) and supports a second cam or eccentric disc which in response to a control signal can be brought into a movement path of the sensing roller (8), for the selected introduction of an opening movement of the pair of clamping jaws (4).

2. Product holding devices according to claim 1, **characterized in that** the control roller (7) and the cam roller (8) are supported in pairwise arrangement on a shaft journal (24), the control roller (7) can be brought into engagement with a first control cam (9) of a stationary cam disc (10) for a planned opening and closing movement of the pair of clamping jaws (4), the cam roller (8) can be brought for the unplanned engagement with the second control cam (19) for a selected opening and closing movement of the pair of clamping jaws (4) in response to an ejection signal, and the shaft journal (24) has preferably supported thereon a cam lever (21) which is in clamping engagement with a bearing shaft (6) of at least one clamping jaw (4b) of a pair of clamping jaws (4), wherein the bearing shaft (6) is rotatably supported in the rotation head (1).

3. Product holding devices according to claim 1 or 2, **characterized by** a slide block (22), coupled by a connection pin (23) with the cam lever (21), wherein the slide block (22) is slidably supported in a transmission lever (17) which is firmly connected to a control shaft (4) of at least one further clamping jaw (4a) of a pair of clamping jaws (4).

4. Packaging machine, particularly for packaging small-sized products, with a plurality of rotating heads for transporting the products and for the individual packaging thereof, **characterized by** product holding devices according to one of the preceding claims 1 to 3.

5. Packaging machine according to claim 4, **characterized by** a grouped packaging device, such as a rod packer, subsequent to an individual packaging of products (P).

6. Packaging machine according to claim 4 or 5, **characterized by** a stacking device for grouping a predetermined number of products and a grouped packaging device downstream thereof.

## Revendications

1. Dispositif de tenue ou de maintien de produits avec un dispositif de commande, notamment pour une machine d'emballage destinée à emballer des produits (P) sous forme de petites pièces, comme des petites pièces de confiserie ou bonbons, comprenant une tête de rotation (1) avec une pluralité d'unités de serrage (3) tournant avec celle-ci, chacune des unités de serrage (3) présentant une paire de mors de serrage (4) ainsi qu'au moins un galet de came (7) en contact avec un premier chemin de came de commande (9) pour un mouvement d'ouverture et de fermeture de la paire de mors de serrage (4), et comprenant également un autre dispositif (13, 16, 18) pour initier un mouvement d'ouverture de la paire de mors de serrage (4),
**caractérisé par**
un deuxième chemin de came de commande (19) mobile par rapport à l'unité de serrage (3) pour le mouvement d'ouverture de la paire de mors de serrage (4) en fonction d'un signal de capteur, le galet de came (7), qui est en contact avec le premier chemin de came de commande (9) d'un premier disque de came (10), commandant le mouvement d'ouverture et de fermeture de la paire de mors de serrage (4), l'unité de serrage (3) présentant un galet palpeur (8) avec lequel peut être mis en prise le deuxième chemin de came de commande (19) en fonction d'un signal de capteur, et le disque de came (10), qui forme le premier chemin de came de commande (9) et assure le montage d'un deuxième disque de came ou disque excentrique, pouvant être amené dans un chemin de déplacement du galet palpeur (8), en fonction d'un signal de commande, pour initier de manière sélective souhaitée un mouvement d'ouverture de la paire de mors de serrage (4).

2. Dispositif tenue ou de maintien de produits selon la revendication 1, **caractérisé en ce que** le galet de commande (7) et le galet de came (8) sont montés selon un agencement apparié sur un tourillon d'arbre (24), le galet de commande (7) peut être amené en prise avec un premier chemin de came de commande (9) d'un disque de came (10) stationnaire pour un mouvement d'ouverture et de fermeture planifiée de la paire de mors de serrage (4), le galet de came (8) peut être amené en prise non planifiée avec le deuxième chemin de came de commande (19) pour un mouvement d'ouverture et de fermeture sélectif souhaité de la paire de mors de serrage (4) en fonction d'un signal d'extraction, et sur le tourillon d'arbre (24) est monté de préférence un levier de came (21), qui est en prise de serrage avec un arbre de montage (6) d'au moins un mors de serrage (4b) d'une paire de mors de serrage (4), l'arbre de montage (6) étant monté tournant dans la tête de rotation (1).

3. Dispositif de tenue ou de maintien de produits selon la revendication 1 ou la revendication 2, **caractérisé par** un patin de glissement (22) couplé par l'intermédiaire d'un tourillon de liaison (23) au levier de came (21), le patin de glissement (22) étant monté de manière coulissante dans un levier de transmission (17), qui est relié de manière fixe à un arbre de commande (5) d'au moins un autre mors de serrage (4a) d'une paire de mors de serrage (4).

4. Machine d'emballage, notamment pour l'emballage de produits sous forme de petites pièces, comprenant une pluralité de têtes rotatives pour le transport des produits et pour leur emballage individuel, **caractérisée par** un dispositif de tenue ou de maintien de produits selon l'une des revendications 1 à 3.

5. Machine d'emballage selon la revendication 4, **caractérisée par** un système d'emballage groupé, tel un emballeur en barres, succédant à un système d'emballage individuel de produits (P).

6. Machine d'emballage selon la revendication 4 ou la revendication 5, **caractérisée par** un dispositif d'empilage pour grouper un nombre prédéterminé de produits, et un système d'emballage groupé lui succédant en aval.
